# EUROPEAN PATENT SPECIFICATION

(11) **EP 3 606 843 B1**
(45) Date of publication and mention of the grant of the patent: **22.04.2026**
(21) Application number: 18781078.3
(22) Date of filing: 29.03.2018
(51) Int. Cl.: B65D 83/00, A01G 25/00, A01M 1/20

(54) **A DEVICE FOR SLOW RELEASE OF FLUIDS IN A UNIFORM MANNER**
VORRICHTUNG ZUR GLEICHMÄSSIGEN LANGSAMEN ABGABE VON FLÜSSIGKEITEN
DISPOSITIF POUR LA LIBÉRATION LENTE ET UNIFORME DE FLUIDES

(30) Priority: 02.04.2017 US 201762480457 P
(43) Date of publication of application: 12.02.2020
(73) Proprietor: Biofeed Environmentally Friendly Pest Control Ltd., 7315000 Kfar Truman (IL)
(72) Inventor: ISRAELY, Nimrod, 7198000 Nili (IL); MINDAL, Enrique, 75421 Rishon Le-Zion (IL)
(74) Representative: Gallo, Luca
(86) International application number: PCT/IL2018/050371
(87) International publication number: WO 2018/185747

(56) References cited:
- GB-A- 2 481 427
- US-A- 5 755 364
- US-A1- 2006 193 695
- US-A1- 2012 024 975
- US-A1- 2014 263 758
- US-B2- 7 832 655
- US-B2- 8 702 915

## Description

### CROSS-REFERENCES TO RELATED APPLICATIONS

This application is related to and claims priority from commonly owned US Provisional Patent Applications: US Provisional Patent Application Serial No. 62/480,457, entitled: A DEVICE FOR SLOW RELEASE OF FLUIDS IN A UNIFORM MANNER, filed on April 2, 2017.

### FIELD OF THE INVENTION

The present invention relates to a device for uniform slow release of fluids in a predetermined controlled manner.

### BACKGROUND OF THE INVENTION

Liquids of all kind take significant part in our everyday lives and are common in our surroundings, e.g. water, petrol, oils, perfumes. Often the usefulness of the liquids depends on the ability to deliver them in a uniform predetermine manner. For example, moving from irrigation based on open canals to sprinklers, which is able to deliver water more evenly and uniform to all places has increased crop productivity. When moving from sprinklers to drippers, irrigation gained a boost thanks to more uniform delivery of the water. However, 'regular' drippers do not dispense the water evenly when the altitude of the terrain is changing and with it the water pressure, resulting in changing quantity of water delivered to each plant, which is undesirable. The requirement to deliver uniform quantities to each plant is so big that the irrigation industry came up with 'regulated drippers' that are able to dispense the same amount of water in cases when water pressure is uneven along the water line. The importance of uniform and equal water dispense to all plants, in a field, is due to the fact that plants require certain amount of water. Too much or too little is not good for the plant.

Fluids, e.g. water, oil and alcohols are capable of dissolving and/or carrying a large variety of soluble and insoluble, including fragrance, semiochemicals, active ingredients, phagostimulants and arrestants. In the current application, we refer to fluid as a mean to transfer desired ingredients in a desired predetermined rate. Unlike water irrigating a field there are systems where the sensitivity to quantities and concentration is much higher than expressed in the relations of water and plants, with or without fertilizers. There are systems where a change of a few percentages in concentrations between the ingredients will not have any effect or even the opposite effect than that desired, or an excess or deficient of a single milligram discharged per day will cause the opposite effect than expected. Typically, chemicals that affect organisms' behavior at levels of grams, micrograms and even nanograms are regarded as semiochemicals. A semiochemical, from the Greek *semeion* meaning "signal", is a generic term used for a chemical substance or mixture that carries a message for purpose of communication. Semiochemical communication can be divided into two broad classes: communication between individuals of the same species (intraspecific) or communication between different species (interspecific). It is usually used in the field of chemical ecology to encompass pheromones, allomones, kairomones, attractants and repellents. Many insects, including parasitic insects, use semiochemicals, which are natural chemicals released by an organism that affect the behaviors of other individuals. Pheromones are intraspecific signals that aid in finding mates, food and habitat resources, warning of enemies, and avoiding competition. Interspecific signals known as allomones and kairomones have similar functions.

Semiochemicals affect the behavior of endless organisms, including human. Below are several examples of how semiochemicals can be used to affect living organisms.
- Humans - Fragrances for attracting, e.g. perfume, aftershave and for improving smell in delimited space, e.g. toilets, living rooms, and for repelling noxious insects.
- Insects -1) Pests: (i) Attractants - to attract insect pests to a trap or any mean that is able to control, i.e. kill, the target pest/s. (ii) Repellents - to keep away noxious insect. 2) Bees - to attract and deliver healing/curing active ingredients that will protect or heal the bees from their parasites and sicknesses, or deliver chemicals that will act on a target plant, e.g. to prevent 'fire blight' in apples by delivering semiochemicals directly to the flowers. 3) Beneficial parasites and natural enemies - can be attracted into a field to improve local natural control and/or to keep them in the field by attracting them to a substitute source of food and feeding them when hosts or food is in deficiency.
- Plants - 1) React to semiochemicals in the environment to produce 'protecting' compounds. Hence, discharging those semiochemicals can improve natural protection and reduce need for pesticides. 2) Delivery of microelements and hormones directly into plants, not through irrigation.

The importance of semiochemicals in our lives, as well as other organisms, cannot be overstatement. This fact has been noticed long ago and much effort has been put into using semiochemicals for human benefit. At the early 20th century there were already several insect's traps containing liquid that emit smell (semiochemicals) that attracts pests in order to trap and hence control them.
Those primary trials, as the ones to follow, experience the downside of working with semiochemicals. Semiochemicals are often created and/or secreted through a liquid/fluid media, however, when exposed to the weather elements, are extremely volatile, which makes it very difficult working with them. Furthermore, as semiochemicals are often made of a mixture of chemicals, organisms are very sensitive to semiochemicals quantity as well as the relative rate of each component within the semiochemical 'mixture'. Thus, as presented by Dr. Nimrod Israeli, and agreed by participants, during the last IOBC meeting of semiochemical experts in December 2015 (https://youtu.be/arL_1euMUD0); to effectively use semiochemicals to manipulate insects' behavior one should hold the following criteria: 1) controlled discharged, 2) fixed mixture of compositions, and 3) long lasting. Since smell by itself does not control insect pests, we can add one more criterion for cases where we wish to control a pest, and that is 4) Conversion Rate - the ability to effectively 'turn' smell into control (dead pest).

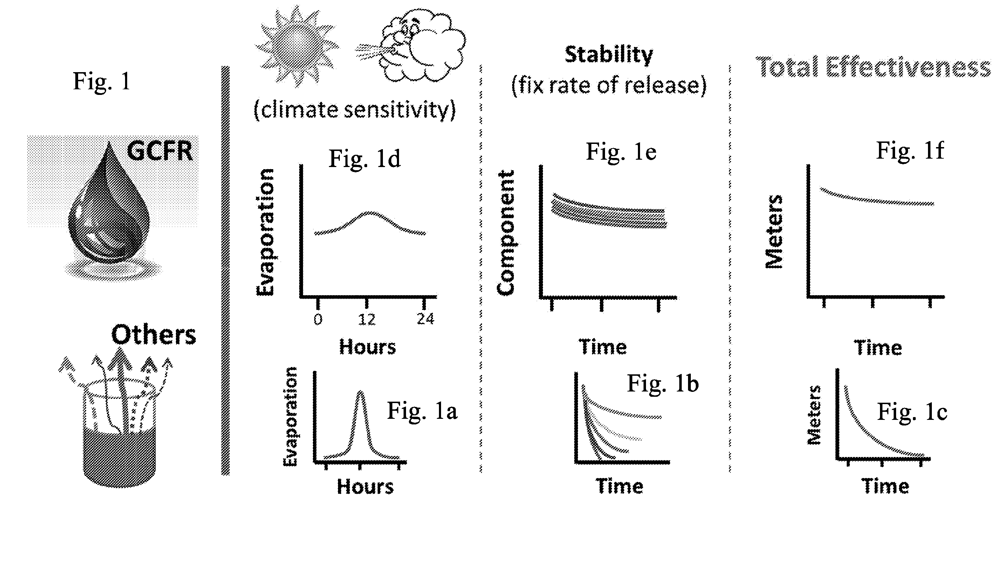

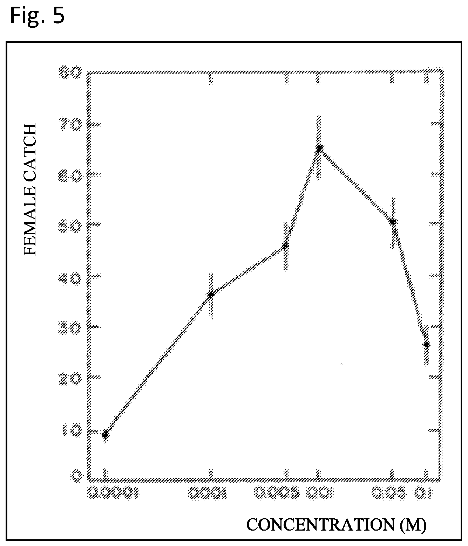

The importance of the above key criteria stems from the following reasons: 1) controlled discharge - every semiochemical or fragrance has its optimum rate of release to create the maximum attraction or repelling effect. Releasing too much or too little material will result in a suboptimal result. FIG. 1 a to c is an illustration of the characteristics of volatile release based on evaporation. Limited level of control is typical to a situation where the rate of release is predominant determined by the weather condition, mostly by temperature. This results in a peak of evaporation at midday (FIG. 1a). For example, in FIG. 5 we see that *Ceratitis capitata* becomes more and more attracted to a formula as its concentration grow from 0.0001M to 0.01M. However, when concentration keeps on growing the semiochemical is rapidly turning into a repellent and the result is that fewer females are caught. 2) Fixed mixture of composition - it is common in biology science that the best attractants, e.g. attractive formulae, or repelling smells are the result of a mixture of several chemicals. This is true for most living organisms, including humans, e.g. same ingredients but different ratio will result two different perfumes; while one may be pleasant the other may be perceived as unpleasant. A small change of the relative rate of the ingredients within the mixture will cause it to become suboptimal and sometimes turn it from 'attractive' into 'unattractive', and vice versa. By definition, different semiochemicals have different molecular bond strength and molecular weight; hence on a fix temperature they evaporate at different rates. The result is similar to the process occur following the opening of a bottle of wine; the initial smell is different than the smells that follow after, which continuously change as some molecules rapidly evaporate, leaving the other molecules behind, only to evaporate later on. If there is no renewal of the exact 'original' mixture than gradually the relative ratio within the mixture will change. This is typical to any system in which smell is released over time based on evaporation (FIG.1b).
3) Long lasting - whether it is for pest control, fragrance release or other uses, semiochemicals are seldom used for short periods of time, such as hours or days and more frequently are practically needed for weeks or months, e.g. a period required to protect crops from pests or a human environment from noxious insects. It means that to be practical and effective the controlled release should keep the relative rate of ingredient fixed over long periods, e.g. weeks and months. Inability to do so will cause the effectiveness of the substance to rapidly decline (FIG.1c). 4) Conversion Rate, the ability to effectively 'turn' smell into control - for effective pest control and insect treatment one should have the ability to deliver an active ingredient, whether it is for control or cure purposes. Up until now there is no reliable technology that is able to cost-effectively deliver semiochemical and fragrances in a controlled, constant and fixed rate, over long periods, without using electricity. Considering that only 1 to 10 percent of the attracted insects actually enter into 'traps', it is safe to say that there is no available effective solution that is able to 'turn smell into control'.

### SUMMARY OF THE INVENTION

There is disclosed herein gravity controlled fluid release (GCFR) technology that has been developed (by Biofeed, Israel) to cost-effectively deliver semiochemical and fragrances in a controlled, constant and fixed rate, over long periods and thereby enable a controlled release of even the 'strongest' semiochemicals that requires the highest precision and an extremely low rate of release.

The invention is set out in the appended set of claims.

According to the present invention there is provided a device for continuous release of a fluid at a near-optimum rate, the device including: a reservoir, having dimensions such that the fluid disposed in the reservoir is held in a shape having a height to a width ratio whereby the width is greater than the height; a flow-rate regulator adapted to regulate fluid release rate of the fluid exiting the reservoir via the flow-rate regulator. According to further features in preferred embodiments of the invention described below the fluid release rate ranges from 0.001 cc. to 1 cc. per day. According to still further features in the described preferred embodiments the fluid release rate ranges from 0.01 cc. to 0.3 cc. per day. According to further features the fluid is comprised of ingredients selected from the group including: fragrances, semiochemicals, stabilizers, attractants, repellents, and a combination thereof. According to further features the fluid has an adjustable viscosity and the fluid release rate is controlled by adjusting the adjustable viscosity of the fluid. According to further features the fluid includes stabilizers employed so as to adjust the adjustable viscosity of the fluid. According to further features the fluid includes compounds selected from the group comprising: volatile components, soluble components, insoluble components and a combination thereof. According to further features the fluid includes: (i) attractants configured to attract specified organisms, and (ii) an active ingredient configured to attach to, or be imbibed by the specified organisms. According to further features the active ingredient is adapted to be transferred by the specified organisms to a target site. According to further features the organism are bees. According to further features the active ingredient is detrimental to the specified organisms. According to further features the height to the width ratio is about 1:20 respectively. According to further features the width ratio is about 1:10 respectively. According to further features the height to the width ratio is about 1:2 respectively. According to further features the device further includes a substrate designed to improve conveyance and evaporation characteristics of the fluid released via the flow rate regulator. According to further features the substrate is covered by a layer of material selected from the group including: an active ingredient, phagostimulants, arrestants, and a combination thereof. According to further features the substrate is a Smart Pad. According to further features the substrate is adapted to collect and absorb the fluid. According to further features the substrate is adapted to improve and control a rate of evaporation. According to further features the substrate is adapted to transfer the fluid from an initial area where the fluid is dispensed thereon to other areas from where the fluid will evaporate or be available to be consumed by a target organism. According to further features the substrate is adapted to retain the fluid dispensed thereon until it evaporates in order to prevent the fluid from escaping the substrate. According to further features the substrate is a barrier between an attractant dispensed on one the of the substrate and an active ingredient disposed on a second side of the substrate.

According to further features the reservoir contains an air aperture positioned so as to equalize air pressure in the reservoir with an atmospheric pressure. According to further features the reservoir is removably attachable to the flowrate regulator. According to further features the reservoir is fixedly coupled to the flowrate regulator. According to further features the reservoir contains a refill opening through which the reservoir can be refilled. According to further features the reservoir can be refilled via the air aperture. According to further features the device further includes a protector, adapted to protect the reservoir from entry of unwanted insects, debris and a combination thereof.

According to further features the protector is a climate protector adapted to protect the reservoir from the group consisting of: direct sunlight, indirect sunlight, radiation, wind, rain and a combination thereof. According to further features the a filler adapted to retain at least some of the fluid within a material matrix of the filler so as to achieve at least one of: improved control over the rate of release of the fluid, improved protection against spill of the fluid, and improved prevention of direct evaporation from the reservoir via ventilation opening. According to further features the filler is a sponge located on top of the fluid. According to further features the device further includes a cover layer disposed within the reservoir and adapted to lay atop the fluid, the cover layer responsible for reducing evaporation and spillover. According to further features the cover layer is a liquid or a solid material.

According to further features the the device is colored in order to provide a feature selected from the group comprising: protect against environmental hazards, attract different organisms, and a combination thereof. According to further features the the device is colored in a color selected from the group consisting of: yellow, black and a combination thereof. According to another embodiment there is provided a device for continuous release of a fluid at a near-optimum rate, the device includes: a reservoir, having dimensions such that the fluid disposed in the reservoir is held in a shape having a height to a width ratio whereby the width is greater than the height;a flow-rate regulator adapted to regulate the release of the fluid exiting the reservoir; and a substrate adapted to improve and control the evaporation rate of the fluid. According to further features the device further includes a handle for suspending the device.

According to further features the device further includes a base enabling the device to stand in an upright position on a flat surface or any other horizontal surface. According to further features the base has an inner shelf on which the substrate can be laid. According to further features the base has an inner shelf in the form of a maze in order to delay the flow-rate of the fluid. According to further features the device further includes ventilation holes positioned as to equalize air pressure in the reservoir with an atmospheric pressure. According to further features the device further includes a connector that connects between the reservoir and the flow-rate regulator, the connector forms a fluid communication system in which the fluid passes from the reservoir through the connector and into the flow-rate regulator.

According to further features the air aperture is formed during the manufacturing process and is covered with a cover component that once removed allows the equalization of air pressure in the reservoir with an atmospheric pressure. According to further features a contour of the air aperture is preformed on the reservoir during the manufacturing process, the preformed contour adapted to be removed, exposing the air aperture. According to further features the the device further includes an elastic cap designed to cling to and cover an opening of the flow-rate regulator in order to prevent spillage.

### BRIEF DESCRIPTION OF THE DRAWINGS

Various embodiments are herein described, by way of example only, with reference to the accompanying drawings, wherein:
FIG. 1a-c is an illustration of the characteristics of volatile release based on evaporation;
FIG. 1d-f is an illustration of the characteristics of volatile release based on GCFR;
FIG. 2 is a list of the 15 semiochemical compounds that compose the *Ceratitis capitata* pheromone;
FIG. 3 is a list of the 36 semiochemical compounds that compose the *Anastrepha obliqua* pheromone;

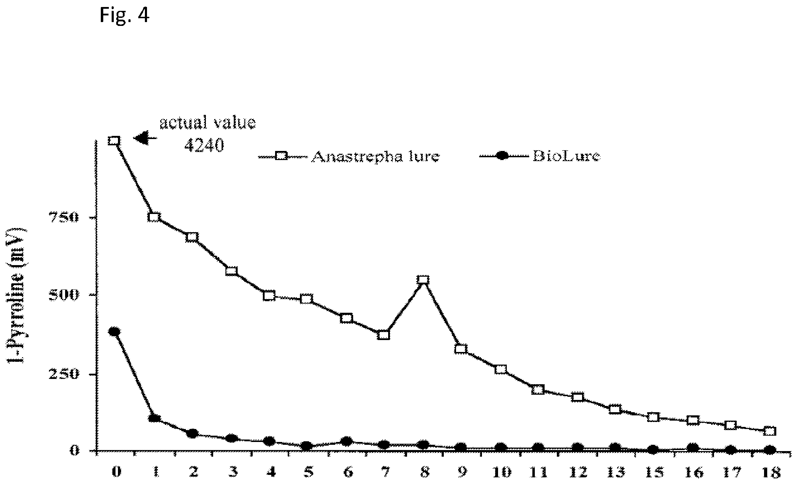

FIG. 4 is a representation of relative emissions of commercial attractant (AFF lures and BioLures) for *Anastrepha ludens;*
FIG. 5 is a representation of the capture rate of C. *capitata* females in response to an increasing concentration of ammonia solution;
FIG. 6 is a decay curve of a sprayed pheromone for *Sesamia nonagrioides*;
FIG. 7 is a decay curve of a sprayed pheromone for *Epiphyas postvittana*;

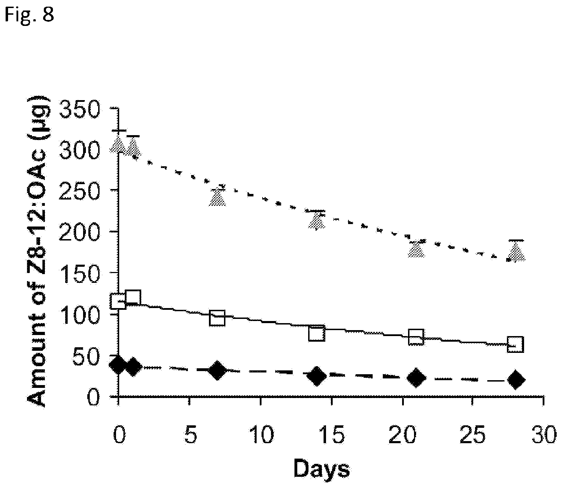

FIG. 8 is a representation of a decline pheromone emission rate of *Grapholita molesta* under field conditions, from red rubber septa loaded with 30, 100 and 300 µg;

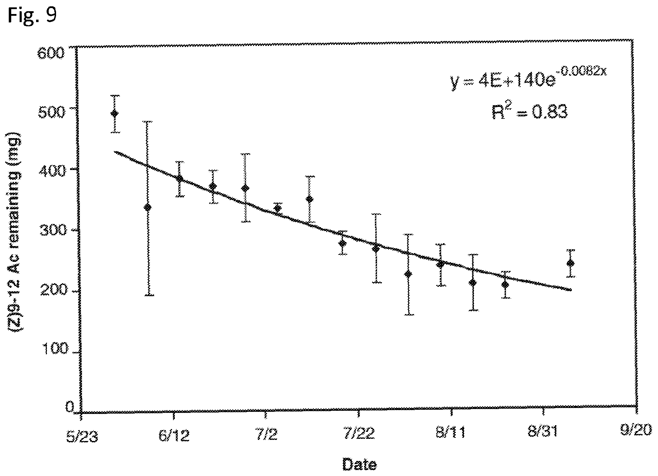

FIG. 9 is a representation of a paraffin wax (SPLAT-GBM^{™}) formulation releasing pheromone for mating disruption of insects in vineyards infested by grape berry moth, *Paralobesia viteana*;

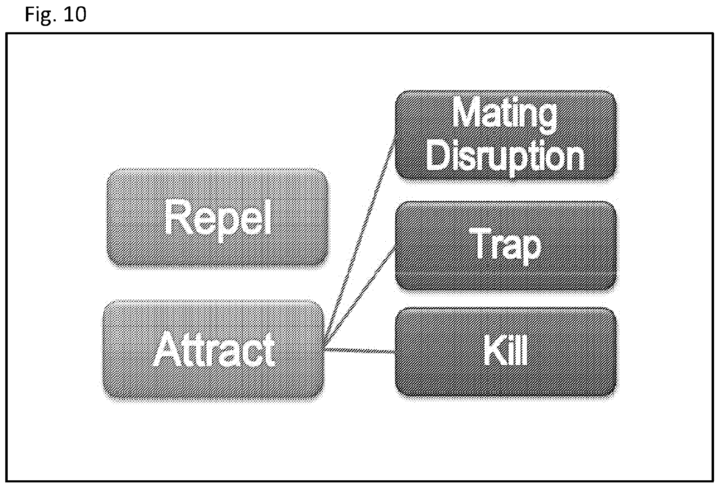

FIG. 10 is a representation of available control techniques based on semiochemicals' release by evaporation;
FIG. 11 is a representation of possible ways using GCFR of control based on semiochemicals' release by gravity, including the differential release of volatiles, soluble and indissoluble;

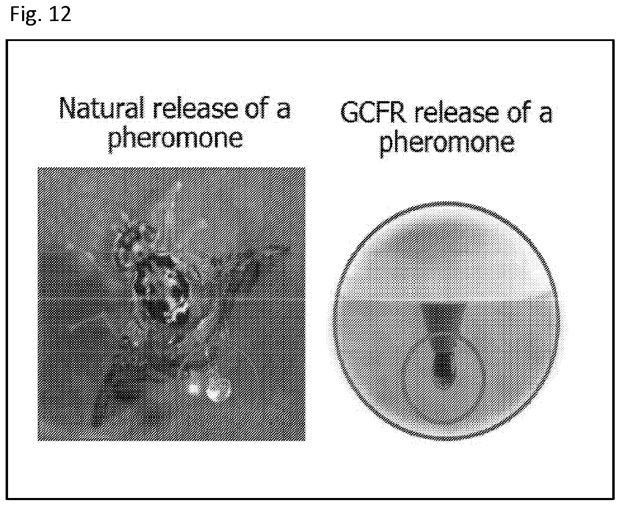

FIG. 12 is a representation of a drop carrying semiochemicals, emitted by a fruit fly and GCFR mechanism;
FIG. 13a is a representation of the rate of change; gram per day. SFR is characterized by diamond dots and GCFR by squares;
FIG. 13b is a representation of the effect of container dimension ratio (height to diameter) with same the substance on the stability of release and ability to control extreme low rate of release;
FIG. 14 is a representation of a GCFR device where the dispenser is screwed to the main body part. For setting on flat surface or to be suspended;
FIG. 15 is a representation of a GCFR device where the dispenser is directly connected to the body part. For setting on flat surface or suspended. Can also be used when suspended on a necklace around the neck of a human or animal;
FIG. 16 is a representation of an exemplary GCFR device;
FIG. 17a is an exploded view of another exemplary GCFR device;
FIG. 17b is a cross-sectional view of the exemplary embodiment of FIG. 17a;
FIG. 18a-d are various views of an exemplary embodiment of the invention that may be used as a Private Fragrance GCFR device for suspension on a necklace / belt of human, dogs, cattle, etc.;
FIG. 19 is a representation of a GCFR device for dispensing liquids, e.g. soap, in toilets when flushing the water;
FIG. 20a is a diagram of an exemplary reservoir without an elastic cap, not falling in the appended claims;
FIG. 20b is a diagram of the reservoir of FIG. 20a with an elastic cap, not falling in the appended claims;
FIG. 20c is a diagram of the reservoir of FIG. 20a with a cover component covering the air aperture, not falling in the appended claims.

### DESCRIPTION OF THE PREFERRED EMBODIMENTS

Today there is a growing public awareness of chemical residue in produce and the environment. In addition, the downsides of the extensive use of insecticides and its effect on human health, biological balance and the environment are better known today. The limitations of insecticide use are becoming better understood. The high cost of the insecticides and the technology needed for applying the product (e.g. tractors, sprayers, labor) which is sometimes wrongly used by many farmers worldwide, makes the use of insecticides inexcusable.

Furthermore, after almost 100 years of insecticide application there are endless cases where results are simply insufficient, often resulting in food shortages as well as blocking marketing and export opportunities due to quality issues or quarantine demands. Also, the investment required for each new pesticide product is enormous, i.e., 10 to 25 years and $150 M to $300 M. Existing pesticides commonly require weekly applications and even then their effectiveness is limited and often insufficient for significant pests. Whiteflies (*Aleyrodidae*)*,* fruit flies (*Tephritids*) and mosquitoes (*Culicidae*) are just three of the many pests whose worldwide control lacks effectiveness. The result is an enormous environmental, commercial and health damage. Consequently, there is a renewed effort to make use of semiochemicals.

Semiochemicals are effective in small volume, affect behavior of insects from a long distance (e.g. from few meters range to tens and even hundreds of meters range), can be applied without special equipment (e.g. tractors and sprayers), can be specific to the target pest and harmless to people, non-target organisms, and the environment. Another important advantage is the potential to have the semiochemicals work for more than a week, which is the effective period for most insecticides applied by spraying.

Intensive efforts to introduce semiochemicals into agriculture started in the 80's of the 20th century and continue to this day. Using advanced equipment, scientists and industry are capable of decoding any semiochemical within few months or years. According to Professor Larry Gut, who in the 80's lead the USDA development of the mating disruption technique, there are over 2,500 known available formulae of insect pests' semiochemicals. There are only about 20 semiochemicals, out of over 2,500 formulae, that are employed commercially for pest control. Of those 20 formulae, about 6 formulae make of approximately 90% of the market. According to Professor Gut mating disruption high cost per hectare, short active period (60 to 90 days), high labor demands to apply 500 to 1,000 units per hectare, and above all its limited effectiveness that enables an average reduction of spraying by only 50%, are amongst the reasons why 30 years later, this technology is applied worldwide on a limited scale of only about 1 million hectares.

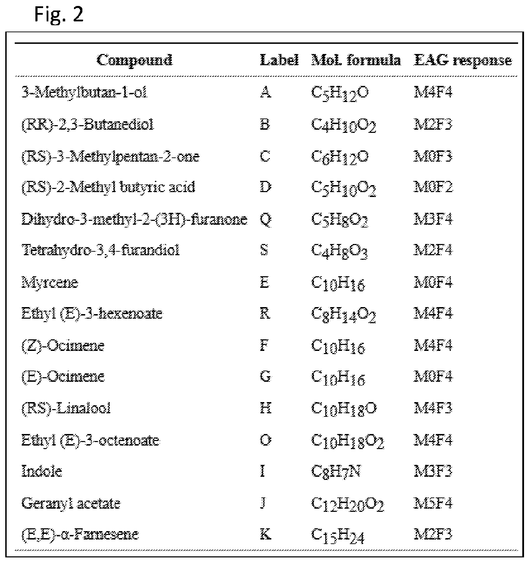

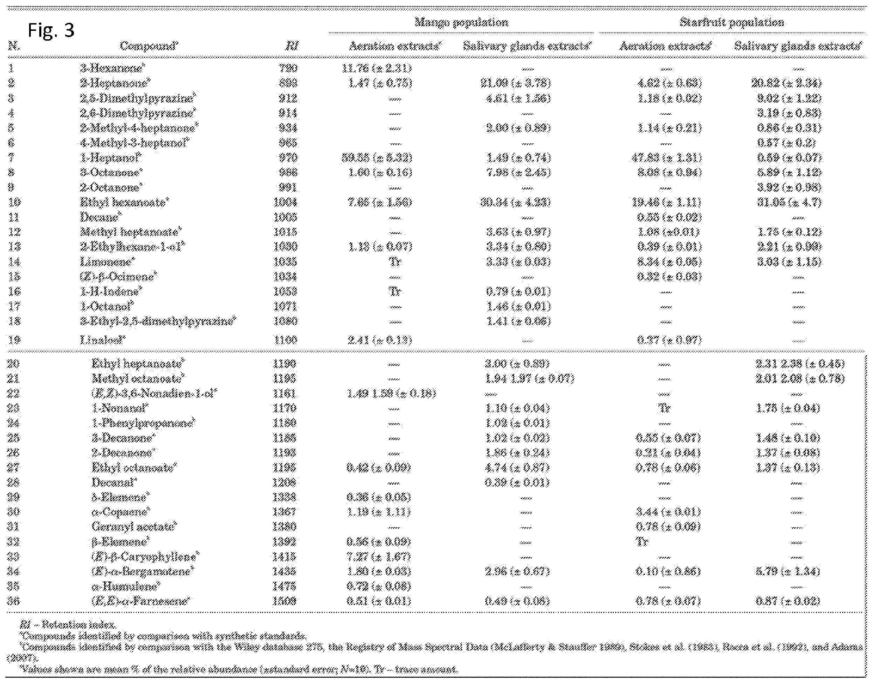

The release of semiochemicals for the 'attract and kill', like the release of pheromones for mating disruption, is based on the principle of releasing the pheromone based on evaporation. Using slow release based on evaporation, there is always a reservoir of the semiochemical, often in its pure or near-pure form. In order to achieve delayed evaporation and gain some kind of controlled release, the semiochemical is stored inside a physical membrane and/or is mixed with a formula that is less volatile, e.g. wax or oil. Using the 'evaporation' approach to determine the rate of release ultimately produces a distinctive decreasing evaporation scheme, often described as 'exponential decay curve', which can be observed in FIGs .1, and 4 to 7. FIG. 2 and 3 present data of natural pheromone mix (i.e. semiochemical) emission. This data presents typical challenges and issues associated with semiochemical release and practical use. For example, evaporation depends on environmental conditions, i.e. weather conditions, to determine the rate of release as well as to evaporate the semiochemical, the fragrance or the mixture. Additional challenges associated with semiochemical release in previous solutions include: (a) A semiochemical blend commonly contains several compounds; (b) The rate of release of each compound is unstable, and continuously changing (c) Some crops, e.g. citrus, require a protection period of 16 to 32 weeks (depends on the variety), and for Area-Wide Management project a year-round solution is preferred, while some semiochemicals lose over 50% of their emissions within 4 to 8 weeks;; (; (d) Previous control solutions enables low Conversion Rate, commonly often less than 10%. As a result, even when using an effective semiochemical (e.g., pheromone) the overall control is insufficient. The gravity controlled fluid release (GCFR) apparatus overcomes these challenges and provides a conversion rate of over 90% (about 95-99%).

What follows is a discussion of issues, which the semiochemical industry deals with, specifically the desired / optimal state versus current practical state:

### Number of Compounds In a Blend

Lures and smells are often made of a blend of 10 to 60 different semiochemicals molecules creating a unique odour, e.g., pheromones, allomones, kairomones, attractants, repellents and perfume.
a. Desired - all compounds in the semiochemical are continuously released at fixed relative rates (Fig. 2-3).
b. In practice - fruit flies' pheromones made of numerous compounds, e.g. 15 for *Ceratitis capitata* and 36 for *Anastrepha obliqua* (Fig. 2-3) whilst in reality even with just 3 compounds producers can neither keep the relative rate of emission nor the stability of emission fixed.

### Rate of Release

Lures and smells are most effective at a certain concentration. The influences of perfumes on people are similar to the influences of semiochemicals on insects; too little is not attractive enough; too much causes the insect to be repelled.
a. Desired -continuously release at the optimum rate. FIG. 5 represents the capture rate of *C. capitata* females in response to an increasing concentration of ammonia solution. In FIG. 5, we see that the maximum number of females were attracted and caught in traps with an ammonia release rate of 5.28 µg/cc/hour. It is clearly evident, once again, that too high a concentration or too low a concentration is less effective than the optimal concentration level.
b. In practice -various products available on the market release unstable quantities of semiochemicals; usually more semiochemicals are released at the beginning of activity and/or when temperature is higher, resulting in a rapid decrease of the release rate, often exponentially, as time goes on and/or the temperature cools. Hence, after a few days / weeks the release rate is already 10 times below the initial concentration.

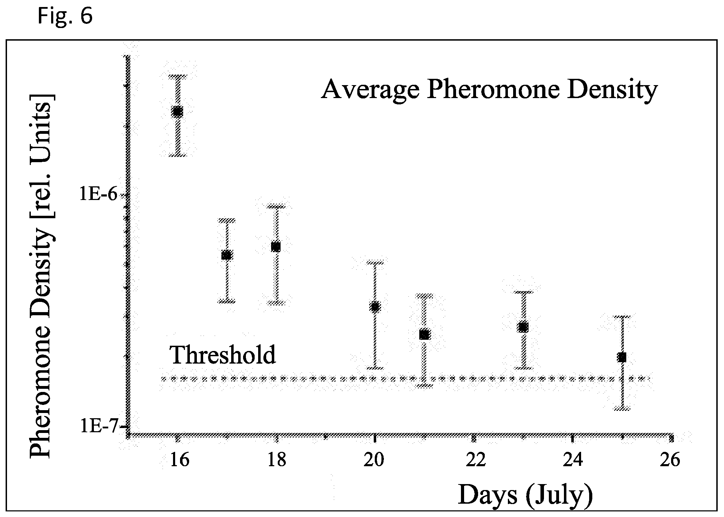

FIG. 6 is a graph displaying a decay curve of sprayed pheromone for *Sesamia nonagrioides* over time. It is evident from the graph that as time progresses the level of pheromone density decreases drastically when compared to the starting point.

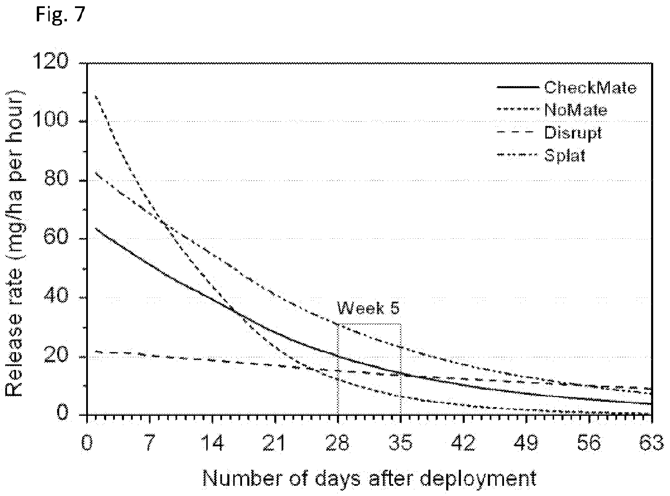

FIG. 7 is a graph displaying a decay curve of a sprayed pheromone for *Epiphyas postvittana.* It is evident from the graph that for all the products tested, the rate of release decreases, and in some cases plummets, in the first 5 weeks after deployment.

### Time Length of Release

Lure and fragrances are manufactured for the express purpose of releasing the fragrance over an extended period of time. It is common to use fragrance products indoors, e.g. toilet or living room, for a period of 4 weeks before needing to be replaced. Air fresheners in cars rarely last more than a few days due to the high temperatures inside the car which cause the potency of the smell released to decline rapidly. In agriculture a fruit growing season is often more than two month and commonly between 4 to 8 months, e.g. olives and citrus. Furthermore, outdoor environment is variable and often hot, dry and windy. Under such harsh environmental conditions evaporation is accelerated, which makes it even more critical and difficult to keep the product effective during the working period.

In recent years the area-wide-management (AWM) of pest control is taking a hold and becoming more accepted as a way of improving pest control while decreasing costs. An important part of AWM is to have a year-round continuous control of the target pest. When using semiochemicals for AWM we should strive for a product that is capable of continuously and effectively work all year around with minimal maintenance or even maintenance-free.
a. Desired - a product that emits a constant amount of semiochemical / fragrance throughout the required period and for up to a year, regardless of whether the product is used indoors or outdoors, in a dry or humid, windy or calm environment.
b. In practice - most products effectively release the lure during the first few days and normally for no more than 60 to 90 days, as discussed above with relation to the rate of release (FIGs. 6 to 7). This is also reflected on the registration labels of 'releasing products', where the effective time of the pheromone, attractants, repellents, and etc. release is stated. Under hot and dry conditions, commercial attractants effectively last even less.

### Typical Ways of Controlling the Release of Lures

There are several common ways of releasing semiochemicals and fragrances. These include, among others, the following:

### 1. 'Ropes', 'tubes', 'patches' and other means of membranes and membrane-like products -

a. Mechanism: the semiochemical, often in its pure form, is inserted into a cavity or impregnated onto a substrate which is inserted into a cavity, tube, an 'envelop like' packing, etc.
b. Control of release: The semiochemical release is controlled by the characteristics of the packaging that enable the chemical to evaporate through the porous material.
c. Main influence on release rate: weather and more specifically; high temperature, low humidity, high radiation and strong wind accelerate evaporation, while the opposite results in slower evaporation.
d. Main implications: (i) most semiochemical are secreted and thereafter evaporate during the hot hours of the day (FIG. 1a); (ii) each semiochemical requires a unique membrane with adjusted porosity according to the molecule characteristics; (iii) effective period is commonly up to 60 to 90 days.
e. Main use: because the above means have no mechanism of delivering active ingredients (A.I.) they are used for 'mating disruption', as well as, inside traps for monitoring and mass trapping purposes.

### 2. Liquid in traps -

a. Mechanism: semiochemicals such as pheromones are often very expensive and evaporate very fast. Therefore, it is impractical to mix them with a liquid and leave the mixture open to evaporate freely. Typically, a liquid in a trap will be water or water-based, and will contain crude chemicals. The crude chemicals include a mixture of chemicals including semiochemicals or chemicals that gradually decompose, or even yeast mixed with sugar that ferment and release attracting semiochemicals.
b. Control of release: determined by the rate the semiochemicals evaporate from the liquid or decompose or by the rate fermentation occurs.
c. Main influence on release rate: temperature and the state of microorganisms in the bait.
d. Main implications: (i) The trap is vastly open to the elements and therefore the amount of liquid is often large, 0.6 to over 2.0 liters, which is sufficient for 2 to 4/6 months. Under hot and dry conditions it may last even less. (ii) Incapable of holding technical semiochemicals. (iii) The state and quantity of microorganisms in the solution determine the quality of attractant, resulting in a continuously changing effectiveness.
e. Main use: for attracting and trapping house flies and fruit flies.

### 3. Feeding stations and Attract & Kill.

a. Mechanism: Attracting the insects to a substrate on which the pests alight and feed on a poisonous formula or touch a poison that will cause its death or simply stick to a sticky substrate. The same method can also be used in order to deliver healing or health-improving active ingredients that will protect and/or feed beneficial insects such as bees and natural enemies.
b. Control of release: by evaporation of free liquid from an open surface, e.g. M3 and Fruitect or from a membrane or membrane-like, e.g. Magnet Med or by the release of fluid through gravity, e.g. Biofeed.
c. Main influences on release rate : temperature, humidity and wind velocity affects the rate of evaporation from liquid and membranes, while gravity, pressure, temperature and characteristics of fluid affects the flow from gravity based products, i.e. Biofeed.
d. Main implications: (i) without a trapping stage the effectiveness of the system increases as often 90 to 99 percent of insects are reluctant to enter through the trap hole. (ii) in case of a feeding station phagostimulants and/or active ingredients should be released or be able to come in contact with the insect.
e. Main use: in order to attract and kill insect pests.

### 4. Puffers -

a. Mechanism: an electronic machine that is programed to puff a predetermined quantity at certain intervals.
b. Control of release: electronic mechanism.
c. Main influence on rate of release: electronic program.
d. Main implications: (i) used to release pheromones under mating disruption programs. (ii) Due to its high cost, need to be connected to electricity, the need to be positioned on a significant stand over the crop (e.g. trees) and the ability to reduce only part of the spraying (i.e. by average 50%) for the target pest, the use of puffers is restricted to highly profitable crops, and overall about 1 million hectare worldwide.
e. Main use: mating disruption.

### 5. Heating - Repellents (indoor and outdoor) - electronic / heated and membrane / porous medium.

a. Mechanism: a repellent / insecticide is being heated either by an equipment plugged to electricity heating a liquid or repellent/insecticide impregnated in a substrate or by burning a substrate impregnated with an insecticide/repellent.
b. Control of release: temperature or the substrate rate of heating / burning.
c. Main influence on rate of release: temperature or the substrate rate of heating / burning.
d. Main implications: (i) often is poisonous and unhealthy, (ii) sufficient for several hours, (iii) the heated material is commonly some sort of alcohol, which by its own proximity to electricity holds a certain kind of danger.
e. Main use: discharge 'repellents', which usually act as low toxicity insecticides that practically kill the pest and not just repel it.

### 6. Bait / Attractant Spraying -

a. Mechanism: a lure is sprayed with or without an insecticide.
b. Control of release: by evaporation from a liquid or viscous substance.
c. Main influence on rate of release: weather (mainly temperature and rain) and characteristics of carrying substance.
d. Main implications: (i) chemical sprayed to the environment, (ii) contact may occur between active ingredients and non-target organisms, (iii) in order to maintain the activity for several months there is a need for repeated application.
e. Main use: poisonous baits with prolonged activity. Commonly used for flies, fruit flies and mosquito control.

### Ways of Transposition

In most cases weather conditions, mainly temperature and humidity, are responsible for the discharge of the semiochemical as well as their transposition, i.e. immediate release to the open air. Therefore, puffers and gravity controlled fluid release (GCFR) are exceptional. In puffers, the act of discharging the semiochemicals / fragrances is predetermined by a program that controls an electronic engine that sprays (puffs) small drops of liquid into the environment. Thereafter the semiochemicals or fragrances evaporate at a rate which depends on the surrounding climate. In GCFR, discharge of semiochemicals is predetermined by gravity, nozzle / controller (e.g. dripper) and fluid characteristics (e.g. viscosity). Once the fluid has dripped or flowed outside of the dispenser the semiochemicals or fragrances evaporate at a rate which depends on the characteristics of the formula, the substrate the fluid was dripped onto, and the climatic conditions to which the substance is exposed to.

There is presently disclosed an innovative GCFR dispenser, substrate and active ingredient (AI). The innovative GCFR suite has been tested in Israel under extreme field conditions, e.g. -5 to 50°C and 5 to 90 RH in the coastal plane, the Jordan Valley and the relatively cold weather of the Golan Heights, with snow in the winter. The active ingredient can be a toxin, a food additive, a medicament, a health additive etc.

During a year-long period, the AI and semiochemicals changed by less than 10%. The same formulae were tested for biological attractiveness to insect pests, i.e. fruit flies such as *Ceratitis capitata, Bactrocera oleae, Dacus ciliatus, Bactrocera dorsalis* and *Bactrocera zonata.* The measured levels of attractiveness to lure, food and food stimulants remained continuously the same during the year-long period, as well as the amount of dead insects following feeding on the bait, in case of stomach AI, or touching it, in case of contact AI. Slow fluid release (SFR) technology describes a technology in which the tank/reservoir height is bigger than its diameter; while in gravity controlled fluid release (GCFR) technology described in the current invention, the tank and/or liquid in the reservoir height is smaller than its diameter. In a comparison between the innovative GCFR technology and SFR products, the rate of release of material using the GCFR technology was shown to be 10 to 1000 times more stable than the SFR products available. Furthermore, GCFR technology, unlike Puffers, does not require the use of electricity.

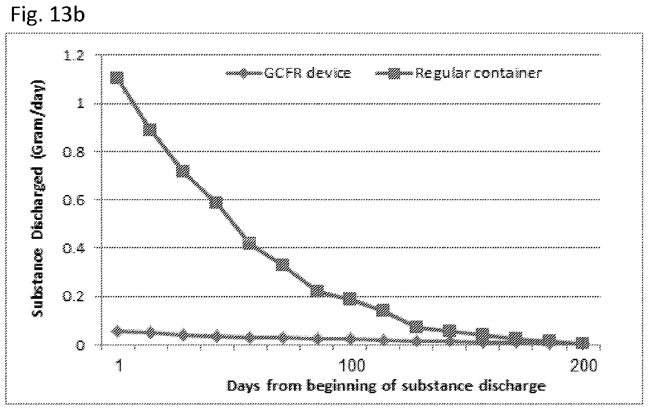

FIG. 13b presents a comparison between SFR and GCFR rate of release per day (gram per day). It is evident from the graph that while the GCFR device maintains almost the same release rate as time progress, the release rate of the SFR device (or "regular container") decreases dramatically over the same time period.

### The way GCFR solve the problems of releasing semiochemicals (e.g., for pest control) and fragrances

### 1) Controlled discharge / release

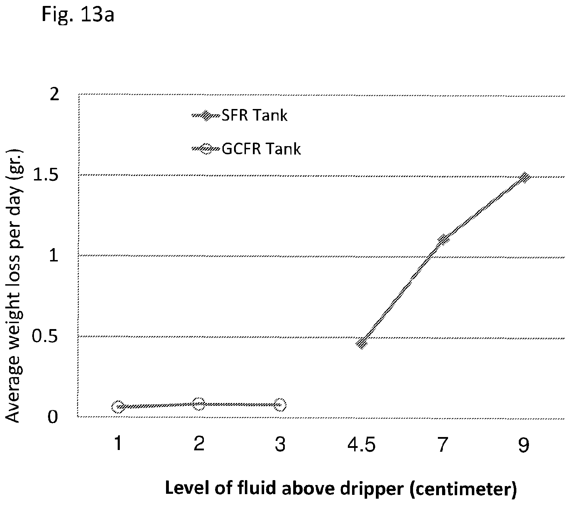

Innovatively, with the instant GCFR mechanism, discharge of a liquid substance is powered by gravitation and regulated by a dripper. Said in another way, gravity is the force that expels the fluid while the dripper is the apparatus that regulates the flow of the fluid out of the dispenser. The lower the level of the fluid in the reservoir the slower the rate of release and consequently the change of quantity from 'start to end' become smaller. For example, FIG. 13a presents the average quantity (gram) per day released when using the same viscous fluid, but at several levels above dripper. In this example one container (i.e. SFR Tank) is high and narrow, while the other (i.e. GCFR Tank) is low and wide. It is easy to see how the rate of release, quantities and stability are profoundly influenced by the shape of the container. When discharging semiochemicals, e.g. for pest control or plant treatment, the rate of release should be low, often well below 0.1 grams per day, and also as constant as possible. Too much or too little fluid release will cause sub-optimal results which might even bring to catastrophic pest control results. It is easier and much more precise to control the release of a liquid by gravity, which is fixed, rather than relying on unpredictable weather conditions and temperature to control the release of volatile semiochemicals, which are kept in the reservoir in a liquid (e.g., Ceratrap) or solid (e.g., Biolure) form.

### 2) Fixed mixture of composition

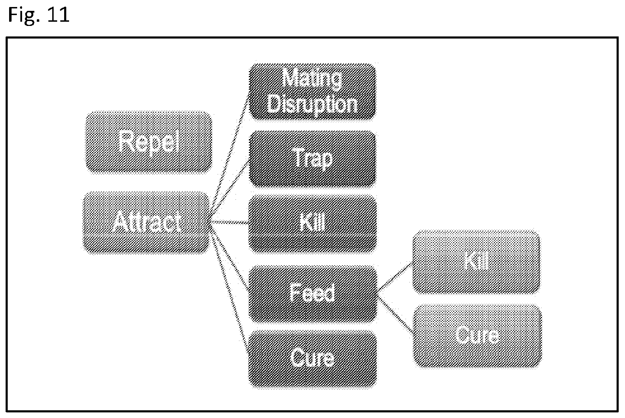

While it is hard and even impossible to control the relative ratio of a mix of molecules going through a membrane, it is easy to keep a fixed ratio of the same molecules within a viscous fluid, which is a common procedure done in many industries and takes part also in the process of controlled release by the instant GCFR mechanism. The chemically stable formula is kept in a closed and protected reservoir. As a result the formula released by the GCFR preserves the same qualities when released outside the reservoir (e.g., as drops, FIG. 11) throughout the activity period. The outcome of this is that the target organism is continuously exposed to the same smell, and as a result the effectiveness remains constant.

### 3) Long lasting

From a commercial and practical point of view, it is useful and advantageous that a semiochemical release system, such as for pest control, will have the capability of long lasting activity. This is due to the nature of most biological ecosystems that requires regulation during a prolonged period during a year, e.g., mosquito control and air treatment. The GCFR enables long lasting activity thanks to the combination of: closed and protected reservoir, the regulated dropper, and the physical properties of the substance. Furthermore, the more concentrated the mixture, the smaller the volume of fluid that needs to be discharged periodically. Hence, the system becomes smaller in volume, last for longer periods, and disables the need for renewal or replacement. The lower the height of the fluid on the day of activation, the smaller the change of quantities discharged per day, and therefore the composition is more precise, more effective and can work for longer periods.

### 4) Logistics

. A common requirement for existing solutions is placing 100 units of an 'attract and kill' product in a field for a one year period of activation. Each unit needs to hold 2 liters (required due to high daily evaporation, e.g. 10 to 70 gram per day). The maintenance requirement of replacing/ filling the units every few month makes the logistics an almost impossible burden to handle. It is simpler, more cost effective and a logistically vial solution to have 10 units of a concentrated composition, where each unit contains 0.05 liters and releases between 0.001 cc. and 1 cc. per day using the innovative GCFR disclosed herein.

### 5) Conversion Rate - The effectiveness of 'turning smell into control'. The conversion rate is the percentage of individuals killed from a group of individuals initially attracted.

With GCFR it becomes simple, easy and possible to combine into the mix of fluids an active ingredient to control or cure the target insect. It is also possible to discharge the attractive fluid to one side of the substrate, e.g. a 'Smart Pad', while the other side is covered by a layer of an active ingredient, and protected from the harsh environment.

The gravity controlled fluid release (GCFR) apparatus according to an embodiment of the present invention is built out of two essential parts: (1) dispenser/container with a fluid / liquid, and (2) a dripper or liquid flow controller. In addition to the two aforementioned basic elements, various particularly preferred implementations of the present invention include one or more of the following:

### 1. Dispenser / Container (reservoir):

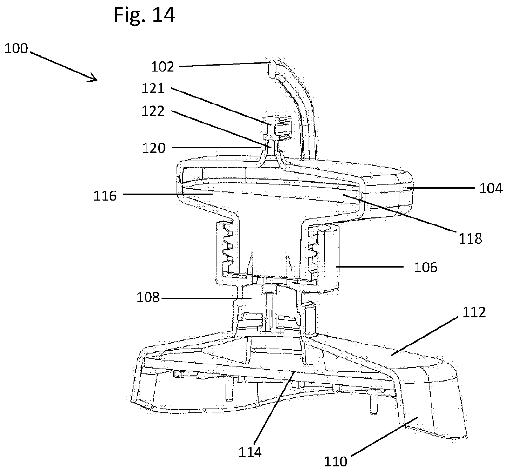

A closed tank with rigid walls for storing the fluid until dispensed. The dispenser may be designed for a single use or reuse. Reusable dispensers have an opening via which the dispenser can be refilled. In addition, the dispenser has a ventilation hole (VH) responsible for equalizing the pressure levels of the inner environment of the dispenser and the outside environment (FIG. 14 118).

The dimensions of a regular fluid reservoir, e.g. dispensers, containers, bottles, tanks, tubes is when its base or bottom side has smaller dimension than height; forming a general shape that is narrow and high. For example, a typical water bottle, with dimensions resembling those of bottles used for 'attract and kill' of flies, e.g. Ceratrap, has the following dimension; 8cm diameter and 30cm height, with a ratio of 1:3.75. Another example for a liquid dispensing container is a Heinz ketchup container has the ratio of ca. 1:2.55. In the current invention in order to achieve a regulated flow of the fluids the base of the reservoir will be larger than the fluid height at the beginning of the activity. The reservoir designed to work with GCFR will have a ratio in which the diameter of the reservoir's base is much larger than the height of the fluid occupying the reservoir. This will ensure the regulation of the flow rate, and as a result will allow the use of lesser amounts of a fluid. The reservoir may have the dimensions of, for example, 2cm, 20cm, and 60cm diameter of the base with 1cm, 2cm, and 3cm height, respectively. Calculating this will present the respected ratios 1:2, 1:10 and 1:20 which demonstrate desired ratios of reservoirs working with GCFR (as can be seen, for example, in FIG.14 104 ). Once there is a free opening between the outside environment and the inside of the reservoir, the pressure at the lowest point of the reservoir depends only on the height of the fluid.

The higher the fluid in the reservoir the higher the pressure at its bottom and therefore the fluid will flow faster out of any opening located at the bottom. The dimensions of the reservoir, and hence the fluid disposed therein, allow for preserving almost the same pressure between start of release and end of release of the fluid. As a result, the rate of change of fluid secretion (flow rate) between start of use (full) and end of use (empty) of the reservoir is negligible. As the fluid height decreases, the pressure will decrease with it and the volume of fluid coming out will decrease, proportionally. The reservoir is innovatively designed to work with GCFR to decrease the rate of change of the fluid's volume secreted using a reservoir structure which is as flat as possible, without becoming capillary.

2. Liquid flow regulator / dripper: To regulate the rate of fluid release we use a 'fluid regulator', e.g. dripper. This is in addition to the regulation by fluid level in the reservoir and fluid characteristics such as viscosity. Typically, one would use a commercial dripper made for regulating the release of water and fertilizer, for example, based on a labyrinth flow path. A typical dripper suitable for implementing the present invention is designed to work mainly with water, under a pressure of 0.5 atmosphere (a pressure of 5 meter of water) or more, and depending on the specific dripper, it would release in the range of 0.5 to 64 liters per hour.

When used in conjunction with the GCFR the exact same dripper with adjusted viscosity fluids can work at a pressure normally ranging from 0.02 to 0.0001 atmosphere, and at a viscosity adjusted by one or more stabilizers, that are capable of altering viscosity. Accordingly, the ability to control the rate of fluid released is at a range of 0.001 cc. to 1 cc. per day. The viscosity enhancers are preferably chosen to be relatively uninfluenced by temperature variations, thereby decreasing dependency on temperature and improving stability of release. In other products (without electricity) the rate of evaporation / fluid release may deviate in the range of ±10 cc. to ±100 cc. per day, under open field conditions. With GCFR the deviation is normally decreased by more than 10 fold. To exploit semiochemicals, such as pheromones, it is absolutely essential to have the smallest possible variation in the range of fluid release, and the resulting discharge of semiochemicals i.e. rate of evaporation. Success in doing so will result high effectiveness, whereas failing to effectively control the release of semiochemicals will result in a product with lower effectiveness.

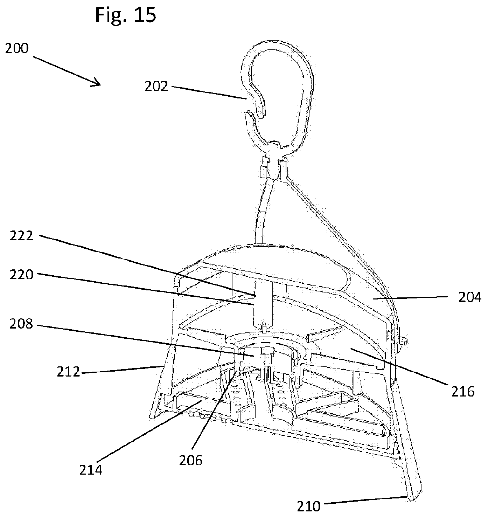

3. Hanging handle: a hanging handle may be a part of the dispenser or GCFR body (e.g. FIG. 15) or as a separate part with one or more connecting points, (e.g. Fig. 14). The GCFR may be suspended from a tree, bush, pole, cord, ceiling, etc. via the hanging handle. In another embodiment the GCFR may be worn on the neck of a human or an animal so that the device moves along with the moving organism, e.g., for releasing fragrance or repellents. Additionally, it can be suspended inside or near an air condition or ventilation system or fashioned as a part thereof. The GCFR can be used for releasing a substance into toilets (for cleaning and improvement of smell). Exemplarily, the GCFR may be suspended from the lip of the toilet bowl so that the substance is released from the dispenser when the nozzle comes in contact with the water when the toilet is flushed.

4. Base: a part that connects the GCFR to a plate, enabling it to stand in an upright position on a flat surface or any other horizontal surface (FIG. 14 110, and FIG. 15 210). In one embodiment the base connects the GCFR to a moving vehicle, such as a cleaning robot moving around a house or as part of an air-condition system. In both examples this kind of operation helps spread the fragrance or semiochemicals throughout a larger area in a closed environment, e.g., room, hall. The base may or may not contain a substance / material or may be made out of a material to improve the conveyance and evaporation characteristics of the semiochemicals, fragrances or any other smells. Additionally or alternatively, where the discharged fluid needs to be easily blown with the moving air or flushed with water or any other gas or fluid, the base will have one or more openings on its bottom and/or sides. Alternatively or additionally the base may be made of a porous material to enable the release, dispersion by wind and/or rinsing of the substance. In another embodiment, the base has an inner shelf on which said substrate can be laid. In yet another embodiment, the inner shelf is in the form of a maze in order to delay the flow-rate of the fluid.

5. Liquid / Fluid: contains the active ingredient/s which is desired to dispense in a predetermine manner. Characteristics of the fluid will correspond to the desired rate of discharge, volatility etc. The fluid may contain one or more of the following ingredients that are necessary for a proper work of the product; volatile, soluble and/or insoluble. Typically one or more of the soluble ingredients will be a volatile semiochemical or fragrance. The Fluid may include the fragrance (in order to attract, repel or for mating disruption) and the active ingredient. The fluid may contain only the semiochemical without the AI, for example in the case of repellents or air treatment.

6. Cover layer: Since the fluid in the dispenser is subject to evaporation and /or to spill through the ventilation hole it may be useful to add lightweight material with zero or low volatility inside the dispenser, above the fluid. The cover layer can be made of solid or liquid material, and once in the container, in its final position, it will float over the substance and hence decrease the rate of substance direct evaporation, i.e. not through the controller. This way evaporation is reduced, simply by limiting the exposed surface area of the liquid.

In cases where the GCFR is meant to be used for very long periods of time, e.g. months or years, even little evaporation through the ventilation hole may accumulate to significant quantities that will influence the effectiveness period as well as the characteristics of the fluid, such as viscosity and fluidity. Additionally, in case the dispenser moves there is a chance that some liquid will spill through one of the holes. Such cover can reduce such undesired events as well.

7. Air aperture (AA) / Ventilation hole (VH): in order to continuously equalize air pressure in the reservoir with the atmospheric pressure, one needs to have one or more openings to the external environmental pressure. A typical hole to enable this will be at the diameter of a regular or larger needle. The VH may be made by the user using a 'puncturing equipment', e.g., needle. Alternatively, the VH is a pre-made one, which is uncovered just before use. Under some scenarios the VH may be blocked/cover to in order to pause the activity. It is important that the opening will enable a free passage of gases between the interior and exterior of the reservoir. The outcome should be the situation where there is no positive, or negative, pressure built inside the dispenser. If the opening is blocked from any reason a positive pressure build up in the reservoir when temperature rises and vice versa, i.e. negative pressure, when temperature drops. This is enormously important when the GCFR is located outside, exposed to the elements. Under such conditions during midday, the pressure in the reservoir will grow and along with the fluid's rate of release. At night, when temperature drops, the opposite may occur resulting in no release of fluids.

Equalizing air pressure with an air aperture can be achieved in number of ways, including: (1) an opening at the top side of the reservoir. Such opening can be formed by puncturing the reservoir or by a structure opening in the reservoir that is exposed upon activation. (2) Tube air aperture - a particularly preferred implementation for the GCFR is a tube that extends from the space over the liquid, through the storage volume of the reservoir to the reservoir external side (preferably to the bottom side). This way gases that evaporate has a way out and pressure (with fragrances) is released to the bottom part of the GCFR, which is where we want to lure the target organisms in the case of attract and kill. It also prevents the entrance of (rain) water, insects or debris, as would be in an upper opening. Additionally, air aperture can also be used to control the rate of release by controlling its characteristics, e.g. diameter, length, etc.

8. Refill aperture: the reservoir can be refilled through the Air aperture or any opening that extends into the reservoir, by squeezing additional fluid from a tube or an injector into the Fluid Reservoir.

9. Protector / Climate Protector: outdoor we need to protect the secreted fluid from evaporating or decomposing too fast. Typically the protection is from direct and/or indirect sunlight, radiation, wind and rain (FIG. 14 110). We may also wish to protect some areas in the GCFR from entry of unwanted insects and/or debris. Therefore, the area where the fluid flows onto is covered from all sides, leaving just enough opening to enable evaporation as well as proper exit of fluid. By contrast, the 'protector' is typically removed when the GCFR is used indoor or wherever we wish to enable rapid evaporation, e.g. fragrance and repellents indoors.

10. Smart Pad (i.e. the active area) - although the fluid may flow directly onto a natural surface such as a tree branch, soil or water, we usually would like to keep the environment completely free of any fluids, even if harmless and safe (FIG. 14 114). In such cases the fluid will flow/drip to an area where it will be collected and/or evaporated from in a continuous manner. Therefore, the 'Smart Pad' has several purposes; (a) a substrate on which the substance will fall or come in contact with once exiting the controller or dripper, (b) a substrate to collect and/or absorb the liquid substance, (c) a substrate to improve and control evaporation and rate of evaporation, (d) a substrate to transfer the substance from the area where it fell on to other area/s from where it will evaporate and/or will be available to be consumed by the target organism (e.g., for extending the surface area for more rapid evaporation). (e) a substrate to hold and retain the discharged substance until it evaporates and keeps it from being spilled when it is unwanted. (f) the substrate serves as a barrier between the substance that it comes in contact with on one side, e.g. liquid with a lure discharge from the reservoir, and substance on its other side, e.g. active ingredient to control the attracted organism. In one embodiment the bottom side of the 'Smart Pad' is covered by a layer of active ingredient and/or phagostimulants and/or arrestants. This enables to keep in the reservoir mainly volatile substances, while the active ingredient, e.g., for pest control or cure, and additives, e.g. phagostimulants, are in place or can be applied/renew by user, e.g. farmer, pest control expert, home owner. Another embodiment is having the active ingredient and/or additives and/or insect glue on the top side of the 'Smart Pad'. Normally this is suitable for indoor use, when we wish to attract pests and have them stick to a surface, which is not in contact with the exterior area.

11. Color - the device's color can be adjusted to any preferred color, color mixture and/or drawing. Colors can protect the device from environmental hazards, such as weather and living organisms. It is also known that some organisms are more attracted to certain colors, e.g. yellow attracts fruit flies, black attracts house flies, etc. Attraction of organisms to a GCFR device can therefore be improved by adding a preferred color.

12. Shape and size - the GCFR can be designed in various shapes and sizes to fit into the desired characteristics of the product, while keeping the relative ratio of the container, as long as the height to diameter ratio of the fluid substance is as described in paragraph #5, Fluid Reservoir.

13. Sponge / Filler - porous material inside the fluid reservoir.

The Sponge / Filler helps to achieve better control on the substance release as well as better protection against spill of the substance and to better prevent direct evaporation from the container through the ventilation opening, etc. It is possible to insert into the fluid reservoir a highly porous substrate that is able to contain / absorb most or all the substance, but at the same time to release it under force of gravity, as the substance is discharged and its level is getting lower within the reservoir. Using a Filler can also help in prevention of noise when the dispenser is shaken.

14. Cap - an easily removed elastic cap mounted on the tip of the dripper designed to cling and cover the opening of the flow-rate regulator in order to prevent spillage , which enables easy logistics and transportation of the dispenser. The cap is removed prior to use.

GCFR is distinct from previous solutions in several characteristics, for example:
1. Effective Time - GCFR enables working with minute quantities for long periods of months and even years. The longer the time period the more important it becomes to keep the container height-to-width ratio well below 1, preferably below 0.5.
2. Flexibility of use - the small size, the reduced quantity of parts, low volume, low production cost, simplicity of use and compatibility of GCFR makes it suitable for use under varied conditions and environments, such as high / low temperature, dry / rainy / wet / humid climate, indoor, outdoor, camping, healthcare campaigns, agriculture, open fields /orchards / green houses, forestry including dropping from the air.
3. Save Labor- the slow release rate of a very powerful and concentrated formula enables the use of fewer units per hectare, and thus save labor and turn Area-Wide Management projects possible.

The principles and operation of according to the present invention may be better understood with reference to the drawings and the accompanying description.

FIG. 14 is a representation of one exemplary embodiment of the current application. FIG. 14 is a cross-sectional view of one exemplary embodiment of the invention. Apparatus 100 has a hanging handle 102 connected to a dispenser 104, which is connected to a connector 106. The dispenser 104 has an air aperture 120, which enables an equal air pressure inside and outside the dispenser 104 and a refill opening 122 that allows the refill of the dispenser 104. In one embodiment the air aperture 120 can be used as a refill opening through which the user can refill the dispenser or in another embodiment as a separate part disposed on the upper surface of the dispenser, at exposed end of an air funnel 121. The dispenser 104 contains a liquid / fluid 116 and a cover layer 118. The cover 118 is a layer over the liquid responsible for reducing evaporation and spillover. The connector 106 is connected to a liquid flow regulator / dripper 108 that is connected to a base 110. The connector 106, the liquid flow regulator / dripper 108 and the base 110 form a "fluid communication" system in which the liquid / fluid 116 passes through the connector 106 and into the liquid flow regulator / dripper 108 which in turn drips drops of the fluid 116 onto a smart pad 114 located on the base 110. The base 110 is covered with a protector / climate protector 112. In some embodiments the climate protector has openings to enable ventilation and evaporation of a substance, while in other embodiments, the protector is devoid of openings. The smart pad 114 absorbs the liquid and evaporates it slowly.

The dripper 108 enables the regulation of fluids discharge by friction through a long, narrow and winding passage.

FIG. 15 is a cross-sectional view of another embodiment of the current application. Apparatus 200 has a hanging handle 202 connected to a dispenser 204. The dispenser 204 is mechanically connected to a base 210. The connection is made using a connector 206. The base is covered with a protector/climate protector 212. The dispenser 204 contains an air aperture 220, which enables an equal air pressure inside and outside the dispenser 204, and a refill opening 222 that allows the refill of the dispenser 204. The dispenser 204 contains a liquid / fluid 216 and is connected to a liquid flow regulator / dripper 208 that enables the regulation of fluids discharge by friction through a long, narrow and winding passage. The base 210 contains a smart pad 214 that absorbs the liquid and evaporates it slowly. The connector 206, the liquid flow regulator / dripper 208 and the base 210 form a "fluid communication" system in which the liquid / fluid 216 passes through the connector 206 and into the liquid flow regulator / dripper 208 which in turn drips drops of the liquid / fluid 216 onto a smart pad 214 located on the base 210.

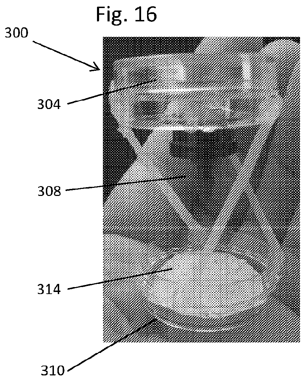

FIG. 16 is another exemplary embodiment of the innovative apparatus 300. Apparatus 300 has a dispenser 304. The dispenser 304 is connected to a base 310. The base 310 contains a smart pad 314 that absorbs the liquid and evaporates it slowly. The dispenser 304 is connected to a liquid flow regulator / dripper 308 that enables the regulation of fluids discharged by the force of gravity by employing the stopping force of friction through a long, narrow and winding passage.

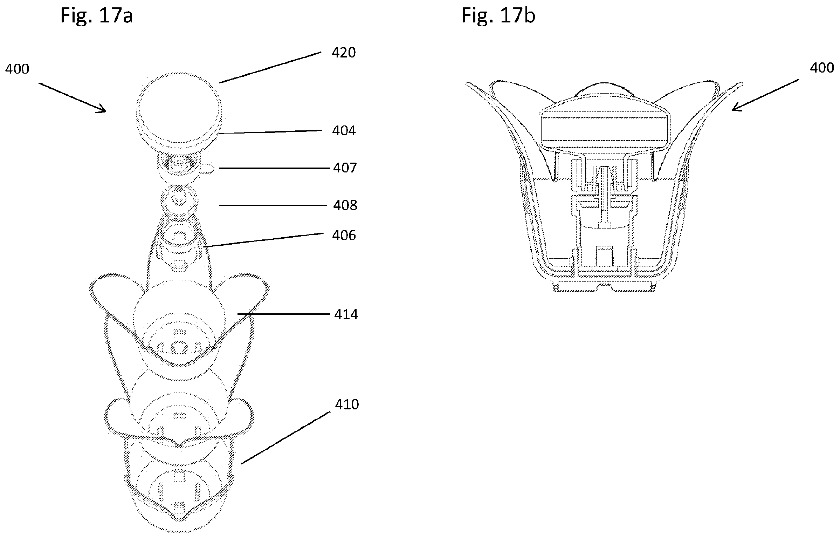

FIG. 17a is an exploded view of an exemplary, ornamental embodiment meant to look like a flower apparatus 400. Figure 17b is a cross-sectional view of flower apparatus 400. Apparatus 400 has a dispenser 404. The dispenser 404 is connected to a base 410. The base 410 contains a smart pad 414 that absorbs the liquid and evaporates it slowly. The dispenser 404 is connected to a liquid flow regulator / dripper 408 that enables the regulation of fluids discharge by friction through a long, narrow and winding passage. The liquid flow regulator / dripper 408 is connected to two connectors, 406 and 407. The connector 406 connects the liquid flow regulator / dripper 408 to the smart pad 414, and the connector 407 connects the liquid flow regulator / dripper 408 to the dispenser 404 and the air aperture 420, which enables an equal air pressure inside and outside the dispenser 404. The connectors 406 and 407, the liquid flow regulator / dripper 408 and the base 410 form a "fluid communication" system in which the fluid passes through the connectors 406 and 407, and into the liquid flow regulator / dripper 408 which in turn drips drops of the fluid onto a smart pad 414 located on the base 410.

The dispenser is separated (with or without the dripper) from the base and the base has a substrate with the ability to transfer semiochemicals by capillarity or gravity and / or the substrate, such as a solvent, to increase the surface area, and as a result to increase the evaporation of the semiochemicals, fragrances, perfumes or any volatile substance.

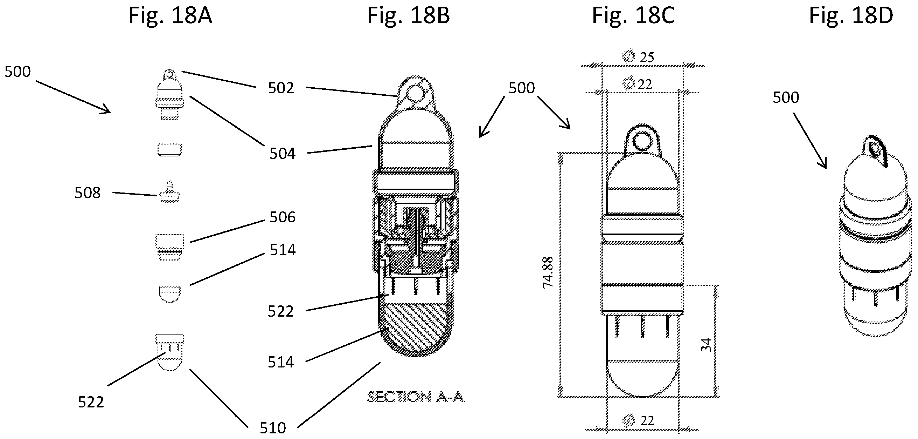

FIGs. 18A-D are various views of an embodiment of the apparatus which can be used, for example, for personal use by hanging around the neck of a person or animal. FIG.18A is an exploded view of apparatus 500, FIG. 18B is a cross-sectional view of apparatus 500, FIG.18C is a front view of apparatus 500, and FIG.18D is an isometric top view of apparatus 500.

Apparatus 500 has a dispenser 504. The dispenser 504 is connected to a base 510. The base 510 contains a substrate 514 that absorbs the liquid which evaporates slowly there-from. The dispenser 504 has a hanging handle 502 formed thereon. The dispenser is in fluid communication with a liquid flow regulator / dripper 508 that enables the regulation of fluids discharged by friction through a long, narrow and winding passage. The liquid flow regulator / dripper 508 is connected to a connector 506. The connector 506 connects the liquid flow regulator / dripper 508 to the substrate 514. Apparatus 500 also includes fragrance openings 522 that enable better release of fragrance and semiochemicals from the base 510 or substrate 514. The connector 506, the liquid flow regulator / dripper 508 and the base 510 form a "fluid communication" system in which the fluid passes through the connector 506 and into the liquid flow regulator / dripper 508 which in turn drips drops of the fluid onto a smart pad 514 located on the base 510.

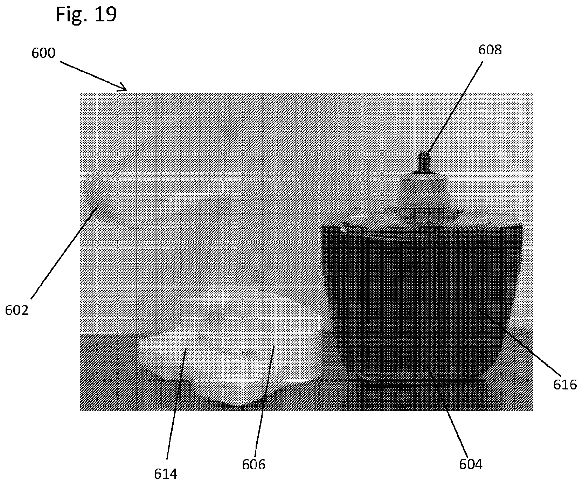

FIG. 19 is an embodiment of a toilet dispenser apparatus 600. Apparatus 600 has a dispenser 604. The dispenser 604 contains a liquid / fluid 616, and is connected to a liquid flow regulator / dripper 608 that enables the regulation of fluids discharge by friction through a long, narrow and winding passage. The dispenser 604 is connected to a connector 606 that contains a smart pad 614. The connector 606 and the smart pad 614 are connected to a hanging handle 602. The connector 606, the liquid flow regulator / dripper 608 and the connector 606 and the smart pad 614 form a "fluid communication" system in which the liquid / fluid 616 passes through the connector 606 and into the liquid flow regulator / dripper 608 which in turn drips drops of the liquid / fluid 616 onto a smart pad 614, which also form the base.

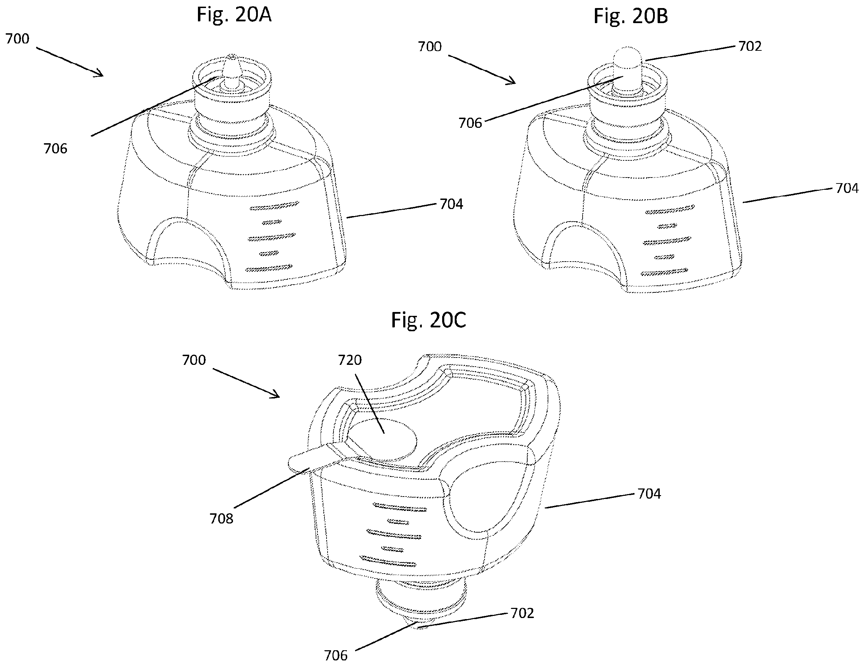

FIG. 20a is a diagram of an exemplary reservoir 700, not falling in the appended claims. Reservoir 700 has a body 704 and a flow regulator/dripper 706. The body 704 has dimentions in which the height is smaller then the width.

FIG. 20b is another diagram of the reservoir 700, not falling in the appended claims. Reservoir 700 has a body 704 and a flow regulator/dripper 706. The flow regulator/dripper 706 is covered with an elastic cap 702 designed to cling to and cover an opening of the flow-rate regulator 706 in order to prevent spillage. The body 704 has dimentions in which the height is smaller then the width.

FIG. 20c is yet another diagram of the reservoir 700, not falling in the appended claims. Reservoir 700 has a body 704 and a flow regulator/dripper 706. The flow regulator/dripper 706 is covered with an elastic cap 702.
The body 704 includes a cover component 708 covering an air aperture 720. The body 704 has dimentions in which the height is smaller then the width.

While the invention has been described with respect to a limited number of embodiments. it will be appreciated that many variations, modifications and other applications of the invention may be made, without departing from the scope as defined in the claims.

## Claims

1. A device for attracting organisms and delivering them an active ingredient, consisting of a device for continuous release of a fluid at a near-optimum rate ranges from 0.001 cc. to 1 cc. per day, the device comprising:
a reservoir (104, 204, 304, 404, 504, 604), having dimensions such that the fluid disposed in said reservoir is held in a shape having a height to a width ratio whereby said width is greater than said height;
a flow-rate regulator (108, 208, 308, 408, 508, 608) adapted to regulate fluid release rate of the fluid exiting said reservoir via said flow-rate regulator;
a substrate designed to improve conveyance and evaporation characteristics of the fluid released via said flow rate regulator;
**characterized in that** the fluid is an attractant,
and **in that** said substrate is a barrier between the attractant dispensed on a first side of said substrate and the active ingredient disposed on a second side of said substrate.

2. The device of claim 1, wherein said fluid release rate ranges from 0.01 cc. to 0.3 cc. per day.

3. The device of claim 1, wherein the fluid comprises ingredients selected from the group including: fragrances, semiochemicals, stabilizers, attractants, and a combination thereof.

4. The device of claim 1, wherein the fluid has an adjustable viscosity and said fluid release rate is controlled by adjusting said adjustable viscosity of the fluid.

5. The device of claim 4, wherein the fluid includes stabilizers employed so as to adjust said adjustable viscosity of the fluid.

6. The device of claim 1, wherein the fluid includes compounds selected from the group comprising: volatile components, soluble components, insoluble components and a combination thereof.

7. The device of claim 1, wherein the attractant is configured to attract specified organisms, and the active ingredient is configured to attach to, or be imbibed by said specified organisms.

8. The device of claim 1, wherein said height to said width ratio is one of 1:20, 1:10 and 1:2 respectively.

9. The device of claim 1, wherein said substrate is covered by a layer of material selected from the group including: an active ingredient, phagostimulants, arrestants, and a combination thereof.

10. The device of claim 1, wherein said substrate is adapted to improve and control a rate of evaporation.

11. The device of claim 1, wherein said reservoir contains an air aperture positioned so as to equalize air pressure in said reservoir with an atmospheric pressure.

## Patentansprüche

1. Vorrichtung zum Anlocken von Organismen und zur Abgabe eines Wirkstoffs an diese, bestehend aus einer Vorrichtung zur langsamen gleichmäßigen Abgabe einer Flüssigkeit mit einer nahezu optimalen Rate im Bereich von 0,001 cm³ bis 1 cm³ pro Tag, wobei die Vorrichtung Folgendes umfasst:
ein Reservoir (104, 204, 304, 404, 504, 604), das Abmessungen aufweist, durch die die in dem genannten Reservoir befindliche Flüssigkeit in einer Form gehalten wird, die ein Höhe-Breite-Verhältnis aufweist, wobei die genannte Breite größer als die genannte Höhe ist;
einen Durchflussmengenregler (108, 208, 308, 408, 508, 608), der geeignet ist, die Flüssigkeitsabgaberate der aus dem genannten Reservoir austretenden Flüssigkeit über den genannten Durchflussmengenregler zu regeln;
ein Substrat, das darauf ausgelegt ist, die Beförderungs- und Verdampfungseigenschaften der über den genannten Durchflussmengenregler freigesetzten Flüssigkeit zu verbessern;
**dadurch gekennzeichnet, dass** die Flüssigkeit ein Lockstoff ist,
und dadurch, dass das genannte Substrat eine Barriere zwischen dem auf einer ersten Seite des genannten Substrats verteilten Lockstoff und dem auf einer zweiten Seite des genannten Substrats verteilten Wirkstoff bildet.

2. Vorrichtung nach Anspruch 1, wobei die genannte Flüssigkeitsabgaberate im Bereich von 0,01 cm³ bis 0,3 cm³ pro Tag liegt.

3. Vorrichtung nach Anspruch 1, wobei die Flüssigkeit Inhaltsstoffe umfasst, die aus der Folgendes umfassenden Gruppe ausgewählt werden: Duftstoffe, Semiochemikalien, Stabilisatoren, Lockstoffe und eine Kombination davon.

4. Vorrichtung nach Anspruch 1, wobei die Flüssigkeit eine anpassbare Viskosität aufweist und die genannte Flüssigkeitsabgaberate durch Anpassung der genannten anpassbaren Viskosität der Flüssigkeit gesteuert wird.

5. Vorrichtung nach Anspruch 4, wobei die Flüssigkeit Stabilisatoren enthält, die eingesetzt werden, um die genannte anpassbare Viskosität der Flüssigkeit anzupassen.

6. Vorrichtung nach Anspruch 1, wobei die Flüssigkeit Verbindungen enthält, die aus der Folgendes umfassenden Gruppe ausgewählt werden: flüchtige Bestandteile, lösliche Bestandteile, unlösliche Bestandteile und eine Kombination davon.

7. Vorrichtung nach Anspruch 1, wobei der Lockstoff darauf ausgelegt ist, bestimmte Organismen anzulocken und der Wirkstoff darauf ausgelegt ist, sich an die genannten Organismen anzulagern oder von diesen aufgesaugt zu werden.

8. Vorrichtung nach Anspruch 1, wobei das genannte Verhältnis der genannten Höhe zu der genannten Breite jeweils 1:20, 1:10 bzw. 1:2 beträgt.

9. Vorrichtung nach Anspruch 1, wobei das genannte Substrat von einer Schicht Material bedeckt ist, das aus der Folgendes enthaltenden Gruppe ausgewählt wird: ein Wirkstoff, Phagostimulantien, Arrestanten und eine Kombination davon.

10. Vorrichtung nach Anspruch 1, wobei das genannte Substrat geeignet ist, eine Verdampfungsrate zu verbessern und zu steuern.

11. Vorrichtung nach Anspruch 1, wobei das genannte Reservoir eine Luftöffnung enthält, die so angeordnet ist, dass der Luftdruck in dem genannten Reservoir mit einem atmosphärischen Druck ausgeglichen wird.

## Revendications

1. Dispositif pour attirer des organismes et délivrer à ceux-ci un ingrédient actif, consistant en un dispositif pour la libération continue d'un fluide à une vitesse quasi-optimale comprise entre 0,001 cc. et 1 cc. par jour, le dispositif comprenant :
un réservoir (104, 204, 304, 404, 504, 604), ayant des dimensions telles que le fluide disposé dans ledit réservoir est maintenu sous une forme ayant un rapport hauteur/largeur, selon lequel ladite largeur est supérieure à ladite hauteur ;
un régulateur de débit (108, 208, 308, 408, 508, 608) apte à réguler la vitesse de libération de fluide du fluide sortant dudit réservoir par le biais dudit régulateur de débit ;
un substrat conçu pour améliorer les caractéristiques de transport et d'évaporation du fluide libéré par ledit régulateur de débit ;
**caractérisé en ce que** le fluide est un appât,
et **en ce que** ledit substrat est une barrière entre l'appât distribué sur un premier côté dudit substrat et l'ingrédient actif disposé sur un second côté dudit substrat.

2. Dispositif selon la revendication 1, dans lequel la vitesse de libération de fluide est comprise entre 0,01 cc. et 0,3 cc. par jour.

3. Dispositif selon la revendication 1, dans lequel le fluide comprend des ingrédients sélectionnés dans le groupe comprenant : des produits parfumés, des substances sémiochimiques, des stabilisants, des appâts et une combinaison de ceux-ci.

4. Dispositif selon la revendication 1, dans lequel le fluide a une viscosité réglable et ladite vitesse de libération de fluide est contrôlée en réglant ladite viscosité réglable du fluide.

5. Dispositif selon la revendication 4, dans lequel le fluide comprend des stabilisants employés de manière à régler ladite viscosité réglable du fluide.

6. Dispositif selon la revendication 1, dans lequel le fluide comprend des composés sélectionnés dans le groupe comprenant : des composants volatils, des composants solubles, des composants insolubles et une combinaison de ceux-ci.

7. Dispositif selon la revendication 1, dans lequel l'appât est configuré pour attirer des organismes spécifiques, et l'ingrédient actif est configuré pour s'attacher auxdits organismes spécifiques ou être absorbé par ceux-ci.

8. Dispositif selon la revendication 1, dans lequel ledit rapport hauteur/largeur est respectivement l'un parmi 1:20, 1:10 et 1:2.

9. Dispositif selon la revendication 1, dans lequel ledit substrat est recouvert d'une couche de matériau sélectionné dans le groupe comprenant : un ingrédient actif, des phagostimulants, des agents de rétention et une combinaison de ceux-ci.

10. Dispositif selon la revendication 1, dans lequel ledit substrat est apte à améliorer et contrôler une vitesse d'évaporation.

11. Dispositif selon la revendication 1, dans lequel ledit réservoir contient une ouverture d'air positionnée de manière à égaliser la pression de l'air dans ledit réservoir avec la pression atmosphérique.
